(19) **Europäisches Patentamt / European Patent Office / Office européen des brevets**

(11) **EP 3 547 741 B1**

(12) **EUROPEAN PATENT SPECIFICATION**

(45) Date of publication and mention of the grant of the patent:
**23.03.2022   Bulletin 2022/12**

(21) Application number: **17889548.8**

(22) Date of filing: **25.12.2017**

(51) International Patent Classification (IPC):
**H04W 52/42** *(2009.01)*   **H04W 16/28** *(2009.01)*
**H04W 28/02** *(2009.01)*

(52) Cooperative Patent Classification (CPC):
**H04W 52/08; H04W 16/28; H04W 28/02;**
**H04W 52/42**

(86) International application number:
**PCT/CN2017/118379**

(87) International publication number:
**WO 2018/126930 (12.07.2018 Gazette 2018/28)**

(54) **POWER CONTROL METHOD AND COMMUNICATION DEVICE**

LEISTUNGSSTEUERUNGSVERFAHREN UND KOMMUNIKATIONSVORRICHTUNG

PROCÉDÉ DE COMMANDE DE PUISSANCE ET DISPOSITIF DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.01.2017   CN 201710002391**

(43) Date of publication of application:
**02.10.2019   Bulletin 2019/40**

(73) Proprietor: **Huawei Technologies Co., Ltd.**
**Longgang District**
**Shenzhen, Guangdong 518129 (CN)**

(72) Inventors:
- **REN, Haibao**
  **Shenzhen**
  **Guangdong 518129 (CN)**
- **WANG, Zheng**
  **Shenzhen**
  **Guangdong 518129 (CN)**

- **WANG, Ting**
  **Shenzhen**
  **Guangdong 518129 (CN)**
- **LI, Yuanjie**
  **Shenzhen**
  **Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(56) References cited:
**EP-A1- 2 824 976      CN-A- 103 067 140**
**CN-A- 103 368 684      CN-A- 104 488 333**
**US-A1- 2014 315 594**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

This application relates to the field of wireless communications technologies, and specifically, to power control methods and communications devices performing the power control methods.

**BACKGROUND**

As one of key techniques of the new radio access technology (new radio access technology, NR), high frequency (high frequency, HF) has been widely researched on for its ability to provide more spectrum resources, support a larger quantity of antennas, and increase system capacities. As a frequency increases, a wavelength of a radio signal becomes shorter correspondingly. A shorter wavelength greatly reduces sizes of antennas on both a receive end and a transmit end, so that a plurality of antennas can be easily integrated into a space-limited panel. A multi-antenna beamforming technology is used to concentrate transmit signal energy in one direction for transmission. This can effectively increase coverage and further improve communication performance. Correspondingly, a receiver can form a directional receive beam, to receive, with a high gain, a radio signal arriving in a given space direction. With continuous evolvement of an antenna packaging technology, a plurality of antenna elements can be more easily nested and combined with a chip to form an antenna panel or an antenna array, so that a transmitter can be configured with a plurality of low-correlation antenna arrays. A plurality of antenna panels can independently form transmit beams, so that one transmitter can send data streams by using different beams to increase capacity or reliability of transmission.

Power control is relatively crucial for an entire wireless communications system. However, no desirable power control method appropriate for NR is available yet at present.

Document US 2014/0315594 discloses a method and an apparatus for controlling power of an uplink in a beam forming system is disclosed. The method includes generating power control information based on a quality of a signal, which is measured for each reception beam of a base station, so as to transmit the power control information to terminals. The method also includes receiving a signal transmitted by using the power control information from at least one terminal.

**SUMMARY**

Embodiments of the present invention is defined by power control methods according to independent claims 1 and 6, and communication devices according to independent claims 9 and 10 , which are applied to NR to ensure efficient and proper allocation of power and thereby improve overall performance of a system. Additional features of the invention are provided in the dependent claims.

The power control methods provided in this application fully considers characteristics of NR through beam-specific power control to ensure efficient and proper allocation of power and thereby improve overall performance of a system.

**BRIEF DESCRIPTION OF DRAWINGS**

Examples in the following are not according to the invention and are present for illustration purpose only.

FIG. 1 is a schematic diagram of a wireless communications system as an example;
FIG. 2 is a schematic diagram of beam communication as an example;
FIG. 3 is another schematic diagram of beam communication as an example;
FIG. 4 is a schematic diagram of a power control method as an example;
FIG. 5 is a schematic structural diagram of power control information according to an embodiment of this application;
FIG. 6 is a schematic diagram of a power control method according to another embodiment of this application;
FIG. 7a is a schematic diagram of timing of signals on beams according to an embodiment of this application;
FIG. 7b is a schematic diagram of another timing of signals on beams according to an embodiment of this application;
FIG. 8 is a schematic structural diagram of a communications device according to an embodiment of this application;
FIG. 9 is a schematic structural diagram of a communications device according to an embodiment of this application;
FIG. 10 is a schematic structural diagram of a communications device as an example; and
FIG. 11 is a schematic structural diagram of a communications device as an example.

**DESCRIPTION OF EMBODIMENTS**

The following describes the embodiments of this application with reference to the accompanying drawings.

Examples in the following are not according to the invention and are present for illustration purpose only.

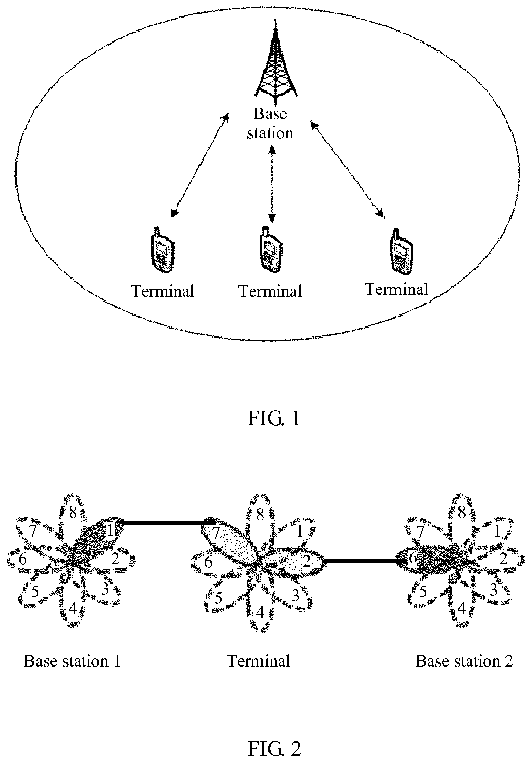

FIG. 1 is a schematic diagram of a wireless communications system to which a technical solution of this application is applicable.

In the solution, the communications system as an example in FIG. 1 at least includes at least one base station and a plurality of terminals.

The system architecture and application scenarios described in the example of this application are intended to describe the technical solution in the embodiments of this application more clearly, and do not constitute limitations on the technical solution in the embodiments of this application. Specifically, the communications system in the example of this application may be, for example, 5G

The base station mentioned in the embodiments of this application is an apparatus deployed in a radio access network and configured to provide a terminal with a wireless communication function. The base station may include various forms of macro base stations, micro base stations (also referred to as small cells), relay stations, transmission/reception points (transmission/reception point, TRP), and the like. In systems that use different radio access technologies, a device functioning as a base station may have different names. For ease of description, all the foregoing apparatuses that are configured to provide a terminal with a wireless communication function are collectively referred to as base stations in all the embodiments of this application.

A terminal included in the embodiments of this application may include various handheld devices, in-vehicle devices, wearable devices, or computing devices that have a wireless communication function, or other processing devices connected to a wireless modem. The terminal may also be referred to as a mobile station (mobile station, MS for short), user equipment (user equipment), or terminal equipment (terminal equipment), and may further include a subscriber unit (subscriber unit), a cellular phone (cellular phone), a smartphone (smart phone), a wireless data card, a personal digital assistant (personal digital assistant, PDA) computer, a tablet computer, a wireless modem (modem), a handheld device (handheld), a laptop computer (laptop computer), a cordless phone (cordless phone) or a wireless local loop (wireless local loop, WLL) station, a machine type communication (machine type communication, MTC) terminal, and the like. For ease of description, all the devices mentioned above are collectively referred to as terminals in all the embodiments of this application.

It should be noted that a quantity and types of terminals included in the communications system shown in FIG. 1 are merely examples, and the embodiments of this application are not limited thereto.

Generally, one antenna panel forms beams in one direction at one time. In this beam direction, different physical signals or physical channels can be carried. For a same type of physical channel or physical signal, one beam may include one or more antenna ports for transmitting a data channel, a control channel, a sounding reference signal, and the like. Alternatively, one beam may further transmit a physical channel used for random access, and the physical channel may be transmitted in any antenna ports. For example, transmit beams may be distribution of signal strength in different spatial directions after signals are transmitted from antennas, and receive beams may be distribution of signal strength in different spatial directions for radio signals received by antennas. It can be understood that one or more antenna ports in one beam may also be considered as an antenna port set. Therefore, one antenna port set includes at least one antenna port. Beam and antenna port set may be used interchangeably in the embodiments of this application.

Specifically, a beam may refer to a precoding vector that has specific energy transmission directivity and that can be identified by index information. The energy transmission directivity means that a signal precoded using the precoding vector is received with more desirable power, for example, with a signal-to-noise ratio meeting needs of reception and demodulation, within a specific range of spatial locations, while in the other spatial locations, a signal precoded using the precoding vector is received with lower power, failing the signal-to-noise ratio to meet needs of reception and demodulation. Different communications devices may have different precoding vectors, that is, correspond to different beams. In accordance with configuration or capability of the communications device, one communications device may use one or more of a plurality of different precoding vectors at a time, to form one or more beams simultaneously. The beam may be understood as a spatial resource. One piece of index information may be used to identify a beam, and the index information may be correspondingly configured as a resource ID corresponding to the user, for example, an ID or a resource of a configured channel state information reference signal (Channel State Information Reference Signal, CSI-RS), an ID or a resource of a configured uplink sounding reference signal (Sounding Reference Signal, SRS), or index information explicitly or implicitly carried in a specific signal or channel carried by the beam, including but not limited to sending a synchronization signal or a broadcast channel to indicate the index information of the beam.

A power control method in this embodiment of this application may be applied to scenarios in which a first device performs power control, during communication between the first device and a second device, on a signal sent by the second device to the first device. For example, in an uplink transmission scenario, the first device may be a base station and the second device may be a terminal. In a D2D scenario, the first device may be a terminal and the second device may be another terminal. This is not limited in this embodiment of this application.

For ease of description and understanding, that the first device is a base station and the second device is a terminal is used as an example for description in the following embodiments.

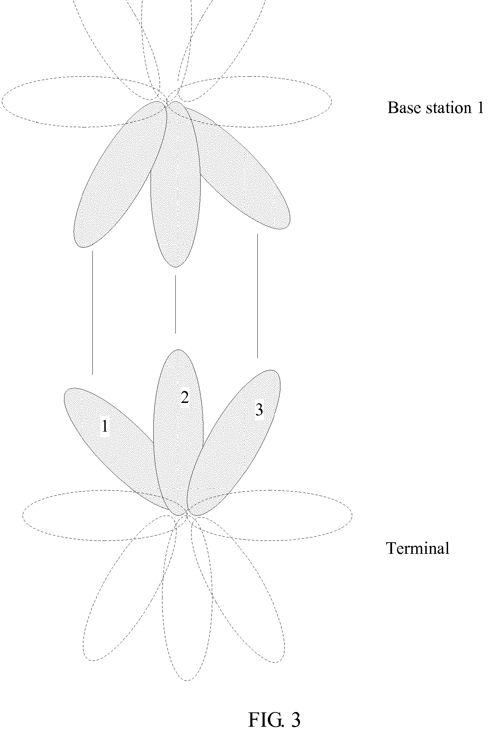

A terminal may use a plurality of beams to communicate with different base stations. As shown in FIG. 2, the terminal uses a beam 7 and a beam 2 to communicate with a base station 1 and a base station 2, respectively. Alternatively, a terminal may use a plurality of beams to communicate with one base station. As shown in FIG. 3, the terminal use three beams to communicate with a base station 1. Certainly, in addition to conditions similar to FIG. 2 or FIG. 3, other scenarios may also be appropriate, which are not illustrated one by one in the embodiments of this application.

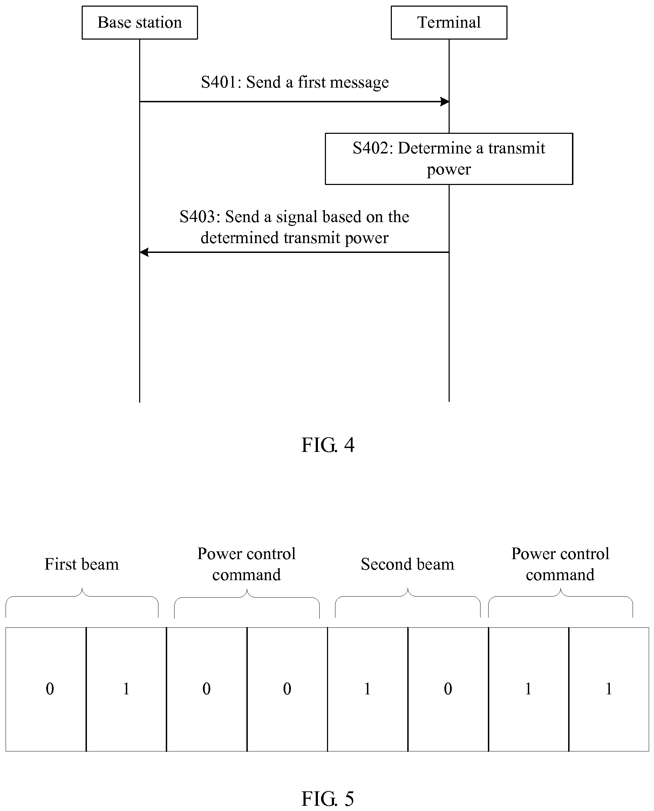

A power control method is provided as an example for illustration purpose only. As shown in FIG. 4, the method includes the following steps.

S401: A base station sends a first message to a terminal.

The first message may include power control information for a first beam of the terminal, and the first beam may include at least one beam. As described above, the terminal may use one or more beams to communicate with at least one base station. In the scenario shown in FIG. 3, for example, the three beams communicating with the base station 1 may be regarded as an entirety to be the first beam, in which case, the first beam may be understood as a beam set, or the three beams may be regarded as independent beams. Alternatively, in the scenario shown in FIG. 2, the beam 7 and the beam 2 are independent beams.

It can be understood that the first message may also include other information in addition to the power control information. This is not limited in this example. The power control information may also include a power control command, and in addition, on a basis of the power control command, other information related to power control may also be included.

The first message may be transmitted through a downlink control channel, and the downlink control channel, for example, may be a channel similar to a physical downlink control channel (physical downlink control channel, PDCCH) in Long Term Evolution (long term evolution, LTE).

The power control command may be a relative command, or may be an absolute command. The relative command may be so understood that after the terminal receives the power control command, a transmit power adjustment result of the terminal is similar to relative adjustment on a basis of a current transmit power. The relative command may also be referred to as an accumulative command. The absolute command may be so understood that after the terminal receives the power control command, a transmit power adjustment result of the terminal is similar to adjustment on a basis of an initial transmit power. Specifically, what power control command is used may be related to factors such as a network requirement and a specific transmission format. This is not limited in this example. For example, a higher layer message may be used to configure the power control command.

Table 1 shows an example of possible values of power control commands. It should be noted that in this example, specific power control commands corresponding to the values of the power control command field are not limited, and a specific quantity of bits of the power control command field is not limited either. A bit length of the power control command field may be predefined, or may be variable.

**Table 1**

| Value of power control command field | Relative power control command (dB) | Absolute power control command (dB) |
|---|---|---|
| 0 | -1 | -4 |
| 1 | 0 | -1 |
| 2 | 1 | 1 |
| 3 | 3 | 4 |

Optionally, the power control information transmitted by the first message may be implemented in any one of the following manners.

(1) The base station performs power control on a plurality of beams and/or beam sets of the terminal in a time division manner. To be specific, occasions for sending power control information for different beams/beam sets are different, and a sending occasion of the first message is associated with the first beam. For example, it is assumed that the base station 1 is to send respective power control information for the beam 1 and the beam 2 of the terminal. In this case, the base station 1 may send the power control information for the beam 1 at a first occasion, and send the power control information for the beam 2 at a second occasion. An occasion for sending a specific beam may be determined based on related configuration information, and the configuration information is related to indexes of beams/beam sets communicating with at least one base station. For example, at least one of processes of beam training, beam alignment, channel-state information measurement, and sounding reference signal sending can be used to determine that at least one beam and/or beam set of the base station and at least of beam and/or beam set of the terminal are used for signal transmission. The base station may indicate, to the terminal by using configuration information, an index of the determined at least one beam or beam set for use in uplink signal transmission. When a beam set is determined, in addition to an index of the beam set, information of specific beams included in the beam set may also be sent to the terminal, so when receiving the identifier of the beam set, the terminal can correlate the beam set with those specific beams.

(2) The first message may include a plurality of pieces of independent power control information, and each piece of independent power control information is corresponding to one beam or beam set. A bit information location of the power control information for each beam or beam set in the first message can be fixed in accordance with related configuration information. For example, the first message may further include power control information for a second beam, and locations of the power control information for the first beam and the power control information for the second beam in the first message are determined based on configuration information, where the second beam includes at least one beam. The configuration information is related to indexes of beams or beam sets communicating with at least one base station. This configuration information is similar to the configuration information described in the foregoing manner (1). Details are not described herein again.

(3) The power control information may further include an identifier of the first beam, and which beam or beam set is corresponding to the power control command may be learned from the identifier. A combination of the identifier and the power control command may be referred to as the power control information. One identifier may be allocated to each beam or beam set for which independent power control is performed.

The identifier of the first beam may be shown in Table 2, and different values correspondingly represent different beams or beam sets. It can be understood that Table 2 is merely an example for description. In this example, a specific manner of correspondence is not limited, and a quantity of bits representing the identifier of the first beam is not limited either. For example, it is assumed that the quantity of bits for power control in the first message may be eight, for providing power control information for two independent beams or beam sets, and the two independent beams or beam sets are referred to as the first beam and the second beam, respectively. The power control information for the first beam and the power control information for the second beam may each occupy four bits. At least one of the four bits is used to identify the beam or beam set, and the other bits serve as a power control field. For example, as shown in FIG. 5, the first four bits are the power control information for the first beam, and the last four bits are the power control information for the second beam.

**Table 2**

| Value of identifier | Beam |
|---|---|
| 0 | 0 |
| 1 | 1 |
| 2 | 2 |
| 3 | 3 |

It can be understood that in the foregoing manners, when the power control information includes an identifier of a beam set, the power control information may be effective to all beams in the beam set. Therefore, for a plurality of beams, only one piece of power control information may be sent, reducing signaling overheads.

Information of a beam included in the beam set, also a correspondence of the beam set and the beam, can be sent to the terminal by using a specific message, for example, the foregoing described configuration information or a following described third message. This is not limited in this example.

It should be noted that the foregoing manners of transferring power control information by using a first message are applicable to scenarios in which a terminal uses beams or beam sets to communicate with one or more base stations. If the base stations send independent power control information to terminals that communicate with the base stations, the base stations may perform processing in similar ways.

S402: The terminal receives the first message sent by the base station, and determines a transmit power of a signal on the first beam based on power control information in the first message.

After receiving the first message, the terminal may demodulate the first message and obtain the power control information corresponding to the first beam, to determine the transmit power of a signal on the first beam.

Optionally, the terminal may determine the transmit power of a signal on the first beam in a plurality of specific manners. For example:

the transmit power of a signal on the beam is determined based on a current base open-loop working point and a power control command corresponding to the beam, for example:

$$\text{Transmit power} = \text{base open-loop working point} + f(\Delta TPC) + \text{other power.}$$

f($\Delta$TPC) represents an accumulated quantity in a case of an accumulative power control command. In a case of an absolute power control command, f($\Delta$TPC) represents a power adjustment value in a current power control command. The other power may be determined by a plurality of factors, and is related to a specific uplink signal and/or channel. For example, at least one of the following related factors may be included: a bandwidth of a to-be-sent uplink signal and/or channel, a modulation and coding order of the uplink signal and/or channel, a format of the uplink signal and/or channel, a semi-statically configured power, a power adjustment value indicated in a random access response message, channel state information feedback, and a hybrid automatic repeat request acknowledgment message. The uplink channel includes but is not limited to one or more of an SRS, a physical uplink control channel (Physical Uplink Control Channel, PUCCH), and a physical uplink shared channel (Physical Uplink Shared Chanel, PUSCH).

Further, the base station may configure a base open-loop working point for an uplink beam of the terminal based on cell load and neighboring cell interference. The base open-loop working point may be described as follows:

$$\text{Base open-loop working point} = P0 + \beta*PL.$$

P0 is a semi-static reference power that is determined by a sum of a common power level (measured by dBm) $P_{O\_NOMINAL}$ of all terminals served by the base station and an offset value $P_{O\_UE}$ specific to a transmit beam of the terminal. $P_{O\_NOMINAL}$ and $P_{O\_UE}$ are configured through a system broadcast message and higher layer signaling, respectively. $\beta$ is a fractional path loss compensation factor used to control interference from an uplink beam of an edge terminal to a neighboring cell and may be configured by using a higher layer message. PL is a path loss compensation value for a path from the terminal to the base station, used to compensate for a path loss from the terminal to the base station. Path loss information may be obtained based on a reference signal received power reported by the terminal and a reference signal transmit power on the base station side.

It should be understood that the foregoing described calculation formulas for the base open-loop working point and the transmit power are merely examples. The formulas have various variations, or parameters in the formulas may be replaced by other related parameters.

S403: The terminal sends a signal to the base station on the first beam based on the transmit power of a signal on the first beam.

Correspondingly, the base station may receive the signal that is sent by the terminal on the first beam.

The power control method provided in this example fully considers characteristics of NR to ensure efficient and proper allocation of power and thereby improve overall performance of a system.

As described above, the first message may include more than one piece of power control information. Optionally, to improve efficiency of demodulation, on a basis of the foregoing example, another example of this application may further include: sending, by the base station, indication information of a quantity of pieces of power control information included in the first message to the terminal.

The indication information of the quantity of pieces of power control information may be included in the first message, or may be sent in other manners. This is not limited in this example. For example, the base station may notify the indication information of the quantity of pieces of power control information to the terminal by using higher layer signaling or physical layer signaling.

By indicating the quantity of pieces of the power control information, complexity of blind detection by the terminal for channels carrying power control information can be reduced. For example, if it is indicated that the first message includes two pieces of power control information, once the terminal detects two pieces of power control information, detection for related channels can be terminated, thereby reducing the complexity of blind detection.

Optionally, when the terminal uses different beams and/or beam sets to communicate with a plurality of base stations, each of the plurality of base stations may send power control information for a beam and/or beam set communicating with the base station to the terminal, or one of the plurality of base stations, for example, one similar to a base station that implements a central control function, may send power control information for the beams and/or beam sets to the terminal. If one of the plurality of base stations sends the power control information for the beams and/or beam sets to the terminal, on a basis of the foregoing method example, the method in this example may further include: receiving, by the base station, power control information sent by another base station.

After receiving and processing the power control information, sent by the another base station, corresponding to a beam and/or beam set, the base station sends at least one piece of power control information to the terminal by using the first message. In this case, the first message sent by the base station may include power control information of the base station, and may also include power control information of another base station. Alternatively, the base station may send a plurality of first messages at different time points, and deliver power control information for a plurality of beams and/or beam sets of the terminal to the terminal, provided that the terminal can identify the power control information for different beams and/or beam sets. This is not limited in this example.

For example, in the scenario shown in FIG. 2, the terminal uses the beam 7 and the beam 2 to communicate with the base station 1 and the base station 2, respectively. It is assumed that all power control information is sent to the terminal by the base station 1. Then, the base station 2 sends power control information corresponding to the beam 2 to the base station 1, and the base station 1 sends the power control information for the beam 7 and the power control information for the beam 2 to the terminal by using at least one first message.

Optionally, in this example, the base station may determine specific power control information for the first beam in the following manners.

The base station determines a specific value of the power control command based on at least one of these factors: an uplink sounding reference signal, an uplink demodulation reference signal, an uplink block error rate, and a modulation and coding order of the terminal. It can be understood that for different network requirements or conditions, the base station may determine the specific power control information in different manners. This is not limited in this example.

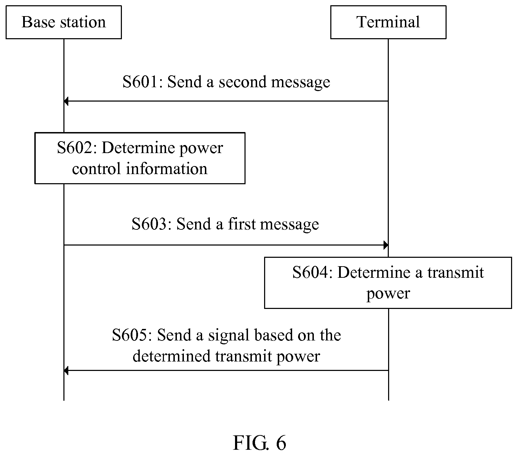

Optionally, the terminal may further send capability information of the terminal to the base station, for the base station to determine the specific power control information. As shown in FIG. 6, another embodiment of this application further provides a power control method, including the following steps.

S601: A terminal sends a second message to a base station, where the second message includes information indicating a capability of sharing power among beams of the terminal.

The capability of sharing power among beams may include any one of the following:

(1) Power can be shared among all beams of the terminal; (2) Power can be shared among some beams of the terminal; and (3) Power can be shared among no beams.

The information indicating the capability of sharing power among beams may be notified in a plurality of manners. This is not limited in this embodiment of this application. The following examples are not according to the invention and are present for illustration purpose only. It is assumed that the terminal has a total of eight beams (beams 1 to 8). An 8-bit piece of information can be used to indicate the capability of sharing power among beams. For example, "10001100" may indicate that power can be shared among the beam 1, the beam 5, and the beam 6. Alternatively as another example, two 4-bit pieces of information may be used to indicate the capability of sharing power among beams. For example, "1001" and "0110" indicate that power can be shared between beam 1 and the beam 4 and between the beam 6 and the beam 7. Alternatively as another example, if power can be shared among all beams, one bit, for example, "1", may be used to indicate the capability of sharing power, and if power can be shared among no beams, also one bit, for example, "0", may be used to indicate the capability of sharing power.

In addition, the terminal may send a related maximum transmit power (a power capacity) to the base station alongside with the information indicating the capability of sharing power among beams. When power can be shared among no beams, a maximum transmit power for each beam may be sent to the base station. When power can be shared among all beams, a sum of maximum transmit powers of all the beams may be sent to the base station. When power can be shared among some beams, a sum of maximum transmit powers of the beams among which power is shared may be sent to the base station.

It can be understood that the information indicating the capability of sharing power among beams and the related maximum transmit power may be included in one message, that is, the second message, to be sent to the base station, or may be sent to the base station by using different messages. A type and a structure of the second message are not limited in this embodiment of this application.

S602: The base station receives the second message and determines power control information for a first beam set based on the second message.

After receiving the second message, the base station can learn specific beams among which power can be shared and among which power cannot be shared, and can further learn the related maximum transmit power, and determine a corresponding allowed maximum power. For example, based on at least one of the following factors: a current condition of interference in a network, a signal quality requirement and an out-of-band emission requirement for an uplink signal of the terminal, a spectrum emission mask and a spurious emission requirement for an uplink signal, impact of an uplink signal on a human body, and the like, the base station may determine the corresponding maximum power allowed by the base station and/or beams among which the maximum power can be shared. A result determined by the base station is sent to the terminal, for example, by using a third message. Optionally, the third message may include beams among which power can be shared and a sum of corresponding maximum powers allowed for the beams among which power is shared, and may further include respective maximum powers allowed for beams among which power is not shared. The third message may include different content depending on different determining results. It can be understood that information, determined by the base station, about the corresponding allowed maximum power and/or the beams among which this maximum power can be shared may be sent by using the third message that is different from a first message, or may be carried in a first message to be sent together with power control information. As an example, sending by using the third message may be performed either before S603 or after S603. This is not limited in this embodiment of this application.

On a basis of the foregoing manner of determining specific power control information for a first beam set, power control is performed on the terminal based on also the second message. This makes more proper allocation of power among beams, and ensures with best effort that ideal transmit powers can be allocated to signals on different beams, thereby improving transmission performance.

S603: The base station sends a first message to the terminal.

S604: The terminal receives the first message sent by the base station, and determines a transmit power of a signal on the first beam set based on power control information in the first message.

S605: The terminal sends a signal to the base station on the first beam set based on the transmit power of a signal on the first beam set.

S603 to S605 in this embodiment of this application are similar to S401 to S403 shown in the example in FIG. 4, respectively. The embodiment shown in FIG. 6 may further include other steps or solutions described in the foregoing embodiment, that is, the base station sends the information indicating the quantity of pieces of power control information included in the first message to the terminal. Therefore, S601 to S602 may be applied to any embodiment of this application.

Further, on a basis of the embodiment shown in FIG. 6, to optimize transmit powers of signals on beams of a terminal, this embodiment of this application may further include: if a sum of transmit powers of signals on beams, among which power can be shared, of the terminal is greater than the sum of the maximum transmit powers allowed for the beams among which power is shared, adjusting downwards a transmit power of a signal on at least one of the beams among which power can be shared, so that the sum of the transmit powers of the signals on the beams among which power can be shared is less than or equal to the sum of the maximum transmit powers allowed for the beams among which power is shared.

For example, it is assumed that power can be shared between a beam 1 and a beam 2 that are for communication with a base station, and that a sum of the maximum transmit powers allowed for the beam 1 and the beam 2 is $P_{max}$. The transmit power of the signal on at least one of the beams among which power can be shared may be adjusted downwards in the following manners that are present for illustration purpose only.

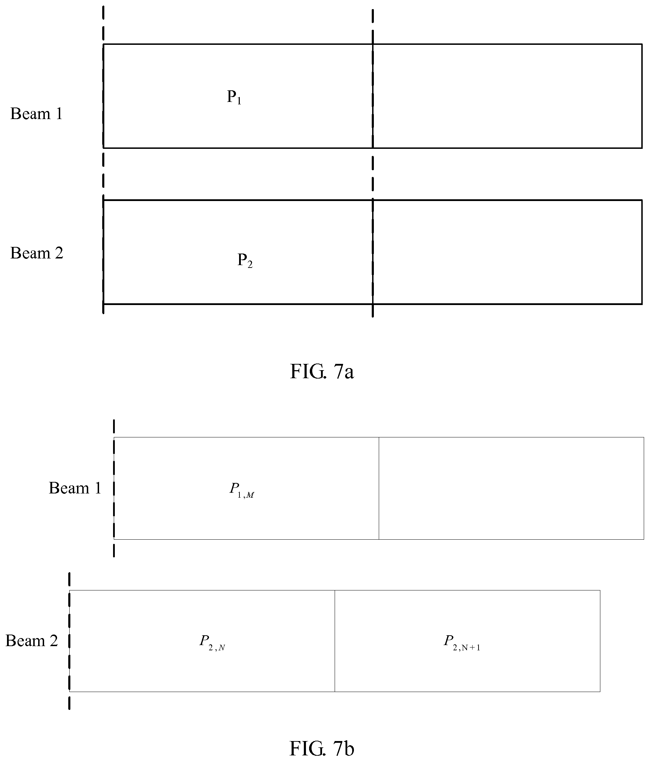

(1) A signal on the beam 1 and a signal on the beam 2 exactly coincide in a power control time unit. As shown in FIG. 7a, the transmit powers, obtained based on the power control information, of the signal on the beam 1 and the signal on the beam 2 are $P_1$ and $P_2$ respectively. If $P_1 + P_2 > P_{max}$, the terminal may adjust downwards a power of at least one of the beam 1 and the beam 2, so that the sum of the power for the beam 1 and the power for the beam 2 is less than or equal to $P_{max}$ after the adjustment. For example, $P_1$ and $P_2$ are multiplied by their respective scaling factors: $P_1' = P_1 * alpha1$ and $P_2' = P_2 * alpha2$. $P_1' + P_2'$ is less than or equal to $P_{max}$. $0 < alpha1 \leq 1$, $0 < alpha2 \leq 1$, and alpha1 and alpha2 are related to channels or signals carried on the beam 1 and the beam 2, respectively. Corresponding values may be configured by the base station, or may be determined by the terminal. This is not limited in this embodiment of this application. (2) A signal on the beam 1 and a signal on the beam 2 do not exactly coincide in a power control time unit. It is assumed that an $M^{th}$ power control time unit of the beam 1 overlaps an $N^{th}$ power control time unit of the beam 2 in time domain, and timing of the $N^{th}$ power control time unit of the beam 2 precedes timing of the $M^{th}$ power control time unit of the beam 1. As shown in FIG. 7b, at least one of a transmit power of the signal, in the $M^{th}$ power control time unit, on the beam 1 and a first transmit power of the signal on the beam 2 may be adjusted downwards. The first transmit power is the greater value between a transmit power of a signal in the $N^{th}$ power control time unit and a transmit power of a signal in the $(N+1)^{th}$ power control time unit. For example, a specific adjustment manner may be: $\alpha_1 \cdot P_{1,M} + \alpha_2 \cdot max\{P_{2,N}, P_{2,N+1}\} \leq P_{max}$, where M and N are natural numbers, $0 < \alpha_1 \leq 1$, $0 < \alpha_2 \leq 1$, $P_{1,M}$ represents the transmit power of the signal, in the $M^{th}$ power control time unit, on the beam 1, $P_{2,N}$ represents the transmit power of the signal, in the $N^{th}$ power control time unit, on the beam 2, and $P_{2,N+1}$ represents the transmit power of the signal, in the $(N+1)^{th}$ power control time unit, on the beam 2. $\alpha_1$ and $\alpha_2$ are related to channels or signals carried on the beam 1 and the beam 2, and their corresponding values may be configured by the base station, or may be determined by the terminal. This is not limited in this embodiment of this application. Further, a power control time unit is a time granularity of power control, and the power control time unit may be a minimum scheduling time unit, or may be an agreed time unit.

It should be noted that the foregoing embodiments of this application are described by using an example in which the first device is the base station and the second device is the terminal. For another scenario, for example, a D2D scenario, a method may be similar. Only execution bodies of steps change. No more details are described herein.

In the foregoing embodiments provided in this application, the power control method provided in the embodiments of this application is described from perspectives of network elements and interaction between network elements. It can be understood that, to implement the foregoing functions, network elements such as the terminal and the base station include corresponding hardware structures and/or software modules for performing the functions. A person of ordinary skill in the art should easily be aware that the units and algorithms steps in the examples described with reference to the embodiments disclosed in this specification may be implemented by hardware or a combination of hardware and computer software. Whether a certain function is performed by hardware or hardware driven by computer software depends on particular applications and design constraints of the technical solutions. A person skilled in the art can implement the described functions by using a different method for each specific application.

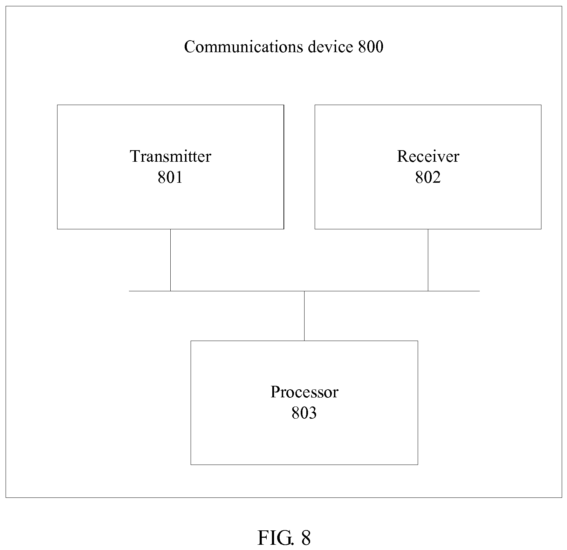

An embodiment of this application further provides a communications device 800. The communications device 800 is configured to implement functions of the first device in the foregoing method embodiments. As shown in FIG. 8, the communications device 800 may include:

a transmitter 801, configured to send a first message to a second device, where the first message includes power control information for a first beam set of the second device, the first beam set includes at least one beam, and the power control information includes a power control command; and
a receiver 802, configured to receive a signal sent by the second device by using the first beam set, where a transmit power of a signal on the first beam set is determined based on the power control information.

Optionally, the transmitter 801 may be further configured to send, to the second device, information indicating a quantity of pieces of power control information carried in the first message.

Optionally, the receiver 802 may be further configured to receive a second message from the second device, where the second message includes information indicating a capability of sharing power among beams of the second device.

Optionally, the transmitter 801 may be further configured to send configuration information, where the configuration information is related to indexes of beams/beam sets communicating with at least one communications device 800.

Optionally, the communications device 800 may further include a processor 803, and the processor 803 is configured to determine, based on the configuration information, a sending occasion of the power control information in the first message or a location of power control information in the first message.

The processor 803 may be configured to determine the power control information for the first beam set. How the processor 803 specifically determines the power control information is not limited in this embodiment of this application.

Optionally, the processor 803 may be further configured to determine, based on a second message received by a receiver 802, a corresponding allowed maximum power and/or beams among which this maximum power can be shared. Then, the transmitter 801 may be further configured to send a third message to the second device, where the third message includes information about a maximum transmit power allowed by the first device, where the information about the allowed maximum transmit power may be respective maximum transmit powers allowed for beams among which power is not shared and/or a sum of maximum transmit powers allowed for the beams among which power is shared. Optionally, the third message may further include information of beams allowed by the first device to participate in power sharing. Alternatively, optionally, the first message may further include the information about the maximum transmit power allowed by the first device, and may also include information of beams allowed by the first device to participate in power sharing.

Optionally, the receiver 802 may be further configured to receive power control information sent by another communications device, and the transmitter 801 is configured to send the received power control information sent by the another communications device to the second device.

It can be understood that the transmitter 801 and the receiver 802 may stand separately, or may be integrated into a transceiver. This is not limited in this embodiment of this application.

The communications device 800 in this embodiment of this application may further include a memory. The memory may be configured to store program code and data of the communications device 800. It can be understood that FIG 8 shows only a simplified design of the communications device 800. In actual application, the communications device 800 may include any quantities of transmitters, receivers, processors, memories, and the like. All communications devices that can implement the embodiments of this application fall within the protection scope of this application.

It should be understood that the foregoing and other operations and/or functions of the units in the communications device in the embodiment of this application shown in FIG. 8 are intended to implement the corresponding procedures in any communication method in FIG. 4 to FIG. 7b. For brevity, details are not repeated herein.

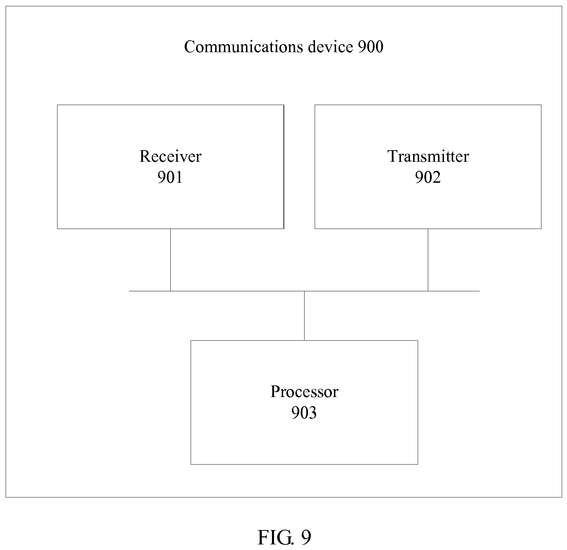

An embodiment of this application further provides a communications device, configured to implement functions of the second device in the foregoing method embodiments. As shown in FIG. 9, the communications device 900 may include:

a receiver 901, configured to receive a first message from a first device, where the first message includes power control information for a first beam set of the communications device 900, the first beam set includes at least one beam, and the power control information includes a power control command; and
a transmitter 902, configured to send a signal to the first device on the first beam set, where a transmit power of a signal on the first beam set is determined based on the power control information.

Optionally, the receiver 901 may be further configured to receive information indicating a quantity of pieces of power control information carried in the first message from the first device.

Optionally, the communications device 900 may further include a processor 903, configured to obtain the power control information corresponding to the first beam set based on the first message, to determine the transmit power of a signal on the first beam set.

Optionally, the transmitter 902 may be further configured to send a second message to the first device, where the second message includes information indicating a capability of sharing power among beams of the second device. The second message may further include a sum of maximum transmit powers of beams among which power is shared and/or maximum transmit powers of beams among which power is not shared.

Optionally, the receiver 901 may be further configured to receive a third message from the first device, where the third message includes information about a maximum transmit power allowed by the first device, where the information about the allowed maximum transmit power includes respective maximum transmit powers allowed for the beams among which power is not shared and/or a sum of maximum transmit powers allowed for the beams among which power is shared. The third message may further include information of beams allowed by the first device to participate in power sharing. The processor 903 may further determine the transmit power based on also the third message. Alternatively, optionally, the first message may further include the information about the maximum transmit power allowed by the first device, and may also include information of beams allowed by the first device to participate in power sharing.

Optionally, the processor 903 may be further configured to: if a sum of transmit powers of signals on beams, among which power can be shared, of the second device is greater than the sum of the maximum transmit powers allowed for the beams among which power is shared, adjust downwards a transmit power of a signal on at least one of the beams among which power can be shared, so that the sum of the transmit powers of the signals on the beams among which power can be shared is less than or equal to the sum of the maximum transmit powers allowed for the beams among which power is shared.

The communications device 900 in this embodiment of this application may further include a memory. The memory is configured to store program code and data of the communications device 900. It can be understood that FIG. 9 shows only a simplified design of the communications device 900. In actual application, the communications device 900 may include any quantities of transmitters, receivers, processors, memories, and the like. All communications devices that can implement the embodiments of this application fall within the protection scope of this application.

It should be understood that the foregoing and other operations and/or functions of the units in the communications device in the embodiment of this application shown in FIG. 9 are intended to implement the corresponding procedures in any power control method in FIG. 4 to FIG. 7b. For brevity, details are not repeated herein.

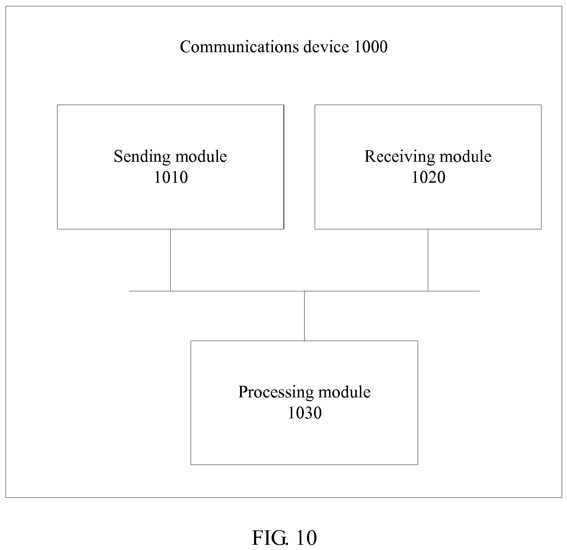

Another structure of the communications device is shown in FIG. 10 as an example for illustration purposes only. The communications device in this example may further include other modules or units, or include modules with functions similar to those of modules in FIG. 10.

A sending module 1010 may be configured to implement functions of the transmitter 801 in FIG. 8. A receiving module 1020 may be configured to implement functions of the receiver 802 in FIG. 8. A processing module 1030 may be configured to implement functions of the processor 803 in FIG. 8.

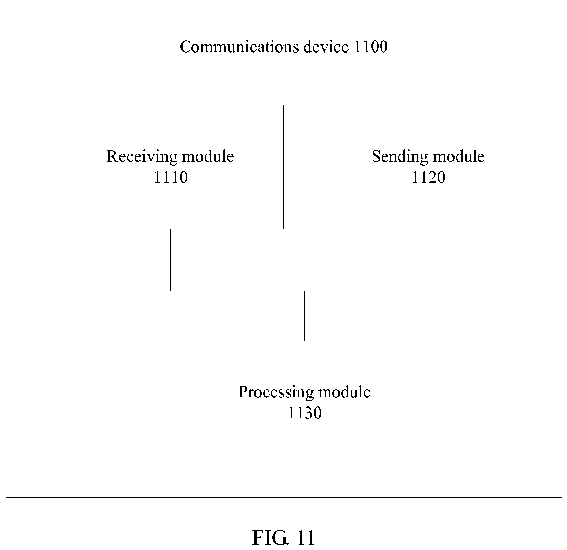

Another structure of the communications device is shown in FIG. 11 as an example for illustration purposes only. The communications device in this example may further include other modules or units, or include modules with functions similar to those of modules in FIG. 11.

A receiving module 1110 is configured to implement functions of the receiver 901 in FIG. 9. A sending module 1120 is configured to implement functions of the transmitter 902 in FIG. 9. A processing module 1130 is configured to implement functions of the processor 903 in FIG. 9.

Furthermore, the processor in this example may be a central processing unit (CPU), a general-purpose processor, a digital signal processor (DSP), an application-specific integrated circuit (ASIC), a field programmable gate array (FPGA) or another programmable logic device, a transistor logic device, a hardware device, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

Method or algorithm steps described with reference to the content disclosed in this application may be implemented by hardware, or may be implemented by a processor executing a software instruction. The software instruction may be generated by a corresponding software module. The software module may be stored in a RAM memory, a flash memory, a ROM memory, an EPROM memory, an EEPROM memory, a register, a hard disk, a removable hard disk, a CD-ROM, or a storage medium of any other form known in the art. For example, a storage medium being an example is coupled to a processor, so that the processor can read information from the storage medium or write information into the storage medium. Certainly, the storage medium may alternatively be a component of the processor. The processor and the storage medium may be located in an ASIC. In addition, the ASIC may be located in a terminal. Certainly, the processor and the storage medium may alternatively exist in the terminal as separate components.

A person skilled in the art should be aware that in the foregoing one or more examples, functions described in this application may be implemented by hardware, software, firmware, or any combination thereof. When this application is implemented by software, the foregoing functions may be stored in a computer readable medium or transmitted as one or more instructions or code in the computer readable medium. The computer readable medium includes a computer storage medium and a communications medium, where the communications medium includes any medium that enables a computer program to be transmitted from one place to another. The storage medium may be any available medium accessible by a general-purpose or dedicated computer.

The objectives, technical solutions, and benefits of this application are further described in detail in the foregoing specific embodiments. It should be understood that the foregoing descriptions are merely specific implementations of this application, and are not intended to limit the protection scope of this application. Any modification within this application shall fall within the protection scope of this application, as defined by the appended claims.

## Claims

1. A power control method, comprising:

   receiving (S602), by a first device, a second message from a second device, wherein the second message comprises information indicating a capability of sharing power among beams of the second device;
   determining (S602), by the first device, power control information for a first beam set of the second device based on the second message;
   sending (S603), by the first device, a first message to the second device, wherein the first message comprises the power control information for the first beam set of the second device, wherein the first beam set comprises at least one beam, and the power control information comprises a power control command and information about a maximum transmit power allowed by the first device, wherein the information about the allowed maximum transmit power comprises respective maximum transmit powers allowed for the beams of the second device among which power is not shared and/or a sum of maximum transmit powers allowed for the beams of the second device among which power is shared; and
   receiving, by the first device, a signal sent by the second device by using the first beam set, wherein a transmit power of a signal on the first beam set is determined based on the power control information.

2. The method according to claim 1, wherein a sending occasion of the first message is associated with the first beam set.

3. The method according to claim 1, wherein the first message further comprises power control information for a second beam, and locations of the power control information for the first beam set and the power control information for the second beam in the first message are determined based on configuration information, the second beam comprises at least one beam, and the configuration information is related to indexes of beams communicating with the first device.

4. The method according to claim 1, wherein the power control information further comprises an identifier of the first beam set.

5. The method according to any one of claims 1 to 4, wherein the method further comprises:
   sending, by the first device to the second device, information indicating a quantity of pieces of power control information carried in the first message.

6. A power control method, comprising:

   sending (S601), by a second device, a second message to a first device, wherein the second message comprises information indicating a capability of sharing power among beams of the second device;
   receiving (S604), by the second device, a first message from the first device, wherein the first message comprises power control information for a first beam set of the second device, wherein the first beam set comprises at least one beam, and the power control information comprises a power control command and information about a maximum transmit power allowed by the first device, wherein the information about the allowed maximum transmit power comprises respective maximum transmit powers allowed for the beams of the second device among which power is not shared and/or a sum of maximum transmit powers allowed for the beams of the second device among which power is shared;

sending, by the second device on the first beam set, a signal to the first device, wherein a transmit power of a signal on the first beam set is determined based on the power control information.

7. The method according to claim 6, wherein the power control information further comprises an identifier of the first beam set.

8. The method according to claim 6 or 7, further comprising:
receiving, by the second device from the first device, information indicating a quantity of pieces of power control information carried in the first message.

9. A first communications device (800), comprising:

a receiver (802), configured to receive a second message from a second device, wherein the second message comprises information indicating a capability of sharing power among beams of the second device;
a processor (803), configured to determine power control information for a first beam set of the second device based on the second message; and
a transmitter (801), configured to send a first message to a second device, wherein the first message comprises power control information for a first beam set of the second device, wherein the first beam set comprises at least one beam, and the power control information comprises a power control command and information about a maximum transmit power allowed by the first device, wherein the information about the allowed maximum transmit power comprises respective maximum transmit powers allowed for the beams of the second device among which power is not shared and/or a sum of maximum transmit powers allowed for the beams of the second device among which power is shared;
wherein the receiver (802) is further configured to receive a signal sent by the second device by using the first beam set, wherein a transmit power of a signal on the first beam set is determined based on the power control information.

10. A second communications device (900), comprising:

a transmitter (902), configured to send a second message to a first device, wherein the second message comprises information indicating a capability of sharing power among beams of the second device;
a receiver (901), configured to receive a first message from a first device, wherein the first message comprises power control information for a first beam set of the second device, wherein the first beam set comprises at least one beam, and the power control information comprises a power control command and information about a maximum transmit power allowed by the first device, wherein the information about the allowed maximum transmit power comprises respective maximum transmit powers allowed for the beams of the second device among which power is not shared and/or a sum of maximum transmit powers allowed for the beams of the second device among which power is shared; and
a processor (903), configured to determine a transmit power of a signal on the first beam set based on the power control information,
wherein the transmitter (902) is further configured to send the signal to the first device on the first beam set.

**Patentansprüche**

1. Leistungssteuerungsverfahren, umfassend:

Empfangen (S602) einer zweiten Nachricht aus einer zweiten Vorrichtung durch eine erste Vorrichtung, wobei die zweite Nachricht Informationen umfasst, die eine Fähigkeit zum Teilen von Leistung zwischen Strahlen der zweiten Vorrichtung angeben;
Bestimmen (S602) von Leistungssteuerungsinformationen für einen ersten Strahlensatz der zweiten Vorrichtung durch die erste Vorrichtung basierend auf der zweiten Nachricht;
Senden (S603) einer ersten Nachricht an die zweite Vorrichtung durch die erste Vorrichtung, wobei die erste Nachricht die Leistungssteuerungsinformationen für den ersten Strahlensatz der zweiten Vorrichtung umfasst, wobei der erste Strahlensatz mindestens einen Strahl umfasst und die Leistungssteuerungsinformationen einen Leistungssteuerungsbefehl und Informationen über eine durch die erste Vorrichtung erlaubte maximale Sendeleistung umfassen, wobei die Informationen über die erlaubte maximale Sendeleistung jeweilige maximale Sendeleistungen, die für die Strahlen der zweiten Vorrichtung erlaubt sind, zwischen denen die Leistung nicht geteilt wird, und/oder eine Summe von maximalen Sendeleistungen, die für die Strahlen der zweiten Vorrichtung erlaubt sind, zwischen denen die Leistung geteilt wird, umfassen; und

Empfangen eines durch die zweite Vorrichtung unter Verwendung des ersten Strahlensatzes gesendeten Signals durch die erste Vorrichtung, wobei eine Sendeleistung eines Signals auf dem ersten Strahlensatz basierend auf den Leistungssteuerungsinformationen bestimmt wird.

2. Verfahren gemäß Anspruch 1, wobei ein Sendeanlass der ersten Nachricht mit dem ersten Strahlensatz verknüpft ist.

3. Verfahren gemäß Anspruch 1, wobei die erste Nachricht ferner Leistungssteuerungsinformationen für einen zweiten Strahl umfasst und die Positionen der Leistungssteuerungsinformationen für den ersten Strahlensatz und die Leistungssteuerungsinformationen für den zweiten Strahl in der ersten Nachricht basierend auf Konfigurationsinformationen bestimmt werden, der zweite Strahl mindestens einen Strahl umfasst und die Konfigurationsinformationen sich auf Indizes von Strahlen beziehen, die mit der ersten Vorrichtung kommunizieren.

4. Verfahren gemäß Anspruch 1, wobei die Leistungssteuerungsinformationen ferner eine Kennung des ersten Strahlensatzes umfassen.

5. Verfahren gemäß einem der Ansprüche 1 bis 4, wobei das Verfahren ferner umfasst:
Senden von Informationen durch die erste Vorrichtung an die zweite Vorrichtung, die eine Anzahl der in der ersten Nachricht enthaltenen Leistungssteuerungsinformationen angeben.

6. Leistungssteuerungsverfahren, umfassend:

Senden (S601) einer zweiten Nachricht an eine erste Vorrichtung durch eine zweite Vorrichtung, wobei die zweite Nachricht Informationen umfasst, die eine Fähigkeit zum Teilen von Leistung zwischen Strahlen der zweiten Vorrichtung angeben;

Empfangen (S604) einer ersten Nachricht aus der ersten Vorrichtung durch die zweite Vorrichtung, wobei die erste Nachricht Leistungssteuerungsinformationen für einen ersten Strahlensatz der zweiten Vorrichtung umfasst, wobei der erste Strahlensatz mindestens einen Strahl umfasst und die Leistungssteuerungsinformationen einen Leistungssteuerungsbefehl und Informationen über eine durch die erste Vorrichtung erlaubte maximale Sendeleistung umfassen, wobei die Informationen über die erlaubte maximale Sendeleistung jeweilige maximale Sendeleistungen, die für die Strahlen der zweiten Vorrichtung erlaubt sind, zwischen denen die Leistung nicht geteilt wird, und/oder eine Summe der maximalen Sendeleistungen, die für die Strahlen der zweiten Vorrichtung erlaubt sind, zwischen denen die Leistung geteilt wird, umfassen;

Senden eines Signals durch die zweite Vorrichtung auf dem ersten Strahlensatz an die erste Vorrichtung, wobei eine Sendeleistung eines Signals auf dem ersten Strahlensatz basierend auf den Leistungssteuerungsinformationen bestimmt wird.

7. Verfahren gemäß Anspruch 6, wobei die Leistungssteuerungsinformationen ferner eine Kennung des ersten Strahlensatzes umfassen.

8. Verfahren gemäß Anspruch 6 oder 7, ferner umfassend:
Empfangen von Informationen aus der ersten Vorrichtung durch die zweite Vorrichtung, die eine Anzahl von Leistungssteuerungsinformationen angeben, die in der ersten Nachricht enthalten sind.

9. Erste Kommunikationsvorrichtung (800), umfassend:

einen Empfänger (802), der dazu konfiguriert ist, eine zweite Nachricht aus einer zweiten Vorrichtung zu empfangen, wobei die zweite Nachricht Informationen umfasst, die eine Fähigkeit zum Teilen von Leistung zwischen Strahlen der zweiten Vorrichtung angeben;

einen Prozessor (803), der dazu konfiguriert ist, Leistungssteuerungsinformationen für einen ersten Strahlensatz der zweiten Vorrichtung basierend auf der zweiten Nachricht zu bestimmen; und

einen Sender (801), der dazu konfiguriert ist, eine erste Nachricht an eine zweite Vorrichtung zu senden, wobei die erste Nachricht Leistungssteuerungsinformationen für einen ersten Strahlensatz der zweiten Vorrichtung umfasst, wobei der erste Strahlensatz mindestens einen Strahl umfasst und die Leistungssteuerungsinformationen einen Leistungssteuerungsbefehl und Informationen über eine durch die erste Vorrichtung erlaubte maximale Sendeleistung umfassen, wobei die Informationen über die erlaubte maximale Sendeleistung jeweilige maximale Sendeleistungen, die für die Strahlen der zweiten Vorrichtung erlaubt sind, zwischen denen die Leistung nicht geteilt wird, und/oder eine Summe von maximalen Sendeleistungen, die für die Strahlen der zweiten Vorrichtung erlaubt sind, zwischen denen die Leistung geteilt wird, umfassen; wobei der Empfänger (802) ferner dazu konfiguriert ist, ein durch die zweite Vorrichtung unter Verwendung des ersten Strahlensatzes gesendetes Signal zu empfangen, wobei eine Sendeleistung eines Signals auf dem ersten Strahlensatz basierend auf den Leistungssteuerungsinformationen bestimmt wird.

**10.** Zweite Kommunikationsvorrichtung (900), umfassend:

einen Sender (902), der dazu konfiguriert ist, eine zweite Nachricht an eine erste Vorrichtung zu senden, wobei die zweite Nachricht Informationen umfasst, die eine Fähigkeit zum Teilen von Leistung zwischen Strahlen der zweiten Vorrichtung angeben;
einen Empfänger (901), der dazu konfiguriert ist, eine erste Nachricht aus einer ersten Vorrichtung zu empfangen, wobei die erste Nachricht Leistungssteuerungsinformationen für einen ersten Strahlensatz der zweiten Vorrichtung umfasst, wobei der erste Strahlensatz mindestens einen Strahl umfasst und die Leistungssteuerungsinformationen einen Leistungssteuerungsbefehl und Informationen über eine durch die erste Vorrichtung erlaubte maximale Sendeleistung umfassen, wobei die Informationen über die erlaubte maximale Sendeleistung jeweilige maximale Sendeleistungen, die für die Strahlen der zweiten Vorrichtung erlaubt sind, zwischen denen die Leistung nicht geteilt wird, und/oder eine Summe von maximalen Sendeleistungen, die für die Strahlen der zweiten Vorrichtung erlaubt sind, zwischen denen die Leistung geteilt wird, umfassen; und
einen Prozessor (903), der dazu konfiguriert ist, eine Sendeleistung eines Signals auf dem ersten Strahlensatz basierend auf den Leistungssteuerungsinformationen zu bestimmen,
wobei der Sender (902) ferner dazu konfiguriert ist, das Signal auf dem ersten Strahlensatz an die erste Vorrichtung zu senden.

**Revendications**

**1.** Procédé de commande de puissance, comprenant les étapes consistant à :

recevoir (S602), par un premier dispositif, un deuxième message provenant d'un deuxième dispositif, le deuxième message comprenant des informations indiquant une capacité de partage de puissance entre les faisceaux du deuxième dispositif;
déterminer (S602), par le premier dispositif, des informations de commande de puissance concernant un premier ensemble de faisceaux du deuxième dispositif d'après le deuxième message ;
envoyer (S603), par le premier dispositif, un premier message au deuxième dispositif, le premier message comprenant les informations de commande de puissance concernant le premier ensemble de faisceaux du deuxième dispositif, le premier ensemble de faisceaux comprenant au moins un faisceau, et les informations de commande de puissance comprenant une instruction de commande de puissance et des informations concernant une puissance de transmission maximale autorisée par le premier dispositif, les informations concernant la puissance de transmission maximale autorisée comprenant les puissances de transmission maximales respectives autorisées pour les faisceaux du deuxième dispositif entre lesquels la puissance n'est pas partagée et/ou une somme de puissances de transmission maximales autorisées pour les faisceaux du deuxième dispositif entre lesquels la puissance est partagée ; et
recevoir, par le premier dispositif, un signal envoyé par le deuxième dispositif au moyen du premier ensemble de faisceaux, une puissance de transmission d'un signal sur le premier ensemble de faisceaux étant déterminée d'après les informations de commande de puissance.

**2.** Procédé selon la revendication 1, dans lequel une occasion d'envoi du premier message est associée au premier ensemble de faisceaux.

**3.** Procédé selon la revendication 1, dans lequel le premier message comprend également des informations de commande de puissance concernant un deuxième faisceau, et les emplacements des informations de commande de puissance concernant le premier ensemble de faisceaux et des informations de commande de puissance concernant le deuxième faisceau dans le premier message sont déterminés d'après des informations de configuration, le deuxième faisceau comprend au moins un faisceau, et les informations de configuration sont liées à des indices de faisceaux communiquant avec le premier dispositif.

**4.** Procédé selon la revendication 1, dans lequel les informations de commande de puissance comprennent également un identifiant du premier ensemble de faisceaux.

**5.** Procédé selon l'une quelconque des revendications 1 à 4, le procédé comprenant également l'étape consistant à : envoyer, par le premier dispositif au deuxième dispositif, des informations indiquant une quantité d'éléments d'informations de commande de puissance transportés dans le premier message.

**6.** Procédé de commande de puissance, comprenant les étapes consistant à :

envoyer (S601), par un deuxième dispositif, un deuxième message à un premier dispositif, le deuxième message comprenant des informations indiquant une capacité de partage de puissance entre les faisceaux du deuxième dispositif ;
recevoir (S604), par le deuxième dispositif, un premier message provenant du premier dispositif, le premier message comprenant des informations de commande de puissance concernant un premier ensemble de faisceaux du deuxième dispositif, le premier ensemble de faisceaux comprenant au moins un faisceau, et les informations de commande de puissance comprenant une instruction de commande de puissance et des informations concernant une puissance de transmission maximale autorisée par le premier dispositif, les informations concernant la puissance de transmission maximale autorisée comprenant les puissances de transmission maximales respectives autorisées pour les faisceaux du deuxième dispositif entre lesquels la puissance n'est pas partagée et/ou une somme de puissances de transmission maximales autorisées pour les faisceaux du deuxième dispositif entre lesquels la puissance est partagée ;
envoyer, par le deuxième dispositif sur le premier ensemble de faisceaux, un signal au premier dispositif, une puissance de transmission d'un signal sur le premier ensemble de faisceaux étant déterminée d'après les informations de commande de puissance.

**7.** Procédé selon la revendication 6, dans lequel les informations de commande de puissance comprennent également un identifiant du premier ensemble de faisceaux.

**8.** Procédé selon l'une quelconque des revendications 6 et 7, comprenant également l'étape consistant à : recevoir, par le deuxième dispositif en provenance du premier dispositif, des informations indiquant une quantité d'éléments d'informations de commande de puissance transportés dans le premier message.

**9.** Premier dispositif de communication (800), comprenant :

un récepteur (802), configuré pour recevoir un deuxième message provenant d'un deuxième dispositif, le deuxième message comprenant des informations indiquant une capacité de partage de puissance entre des faisceaux du deuxième dispositif;
un processeur (803), configuré pour déterminer des informations de commande de puissance concernant un premier ensemble de faisceaux du deuxième dispositif d'après le deuxième message ; et
un émetteur (801), configuré pour envoyer un premier message à un deuxième dispositif, le premier message comprenant des informations de commande de puissance concernant un premier ensemble de faisceaux du deuxième dispositif, le premier ensemble de faisceaux comprenant au moins un faisceau, et les informations de commande de puissance comprenant une instruction de commande de puissance et des informations concernant une puissance de transmission maximale autorisée par le premier dispositif, les informations concernant la puissance de transmission maximale autorisée comprenant les puissances de transmission maximales respectives autorisées pour les faisceaux du deuxième dispositif entre lesquels la puissance n'est pas partagée et/ou une somme de puissances de transmission maximales autorisées pour les faisceaux du deuxième dispositif entre lesquels la puissance est partagée ;
le récepteur (802) étant également configuré pour recevoir un signal envoyé par le deuxième dispositif au moyen du premier ensemble de faisceaux, une puissance de transmission d'un signal sur le premier ensemble de faisceaux étant déterminée d'après les informations de commande de puissance.

**10.** Deuxième dispositif de communication (900), comprenant :

un émetteur (902), configuré pour envoyer un deuxième message à un premier dispositif, le deuxième message comprenant des informations indiquant une capacité de partage de puissance entre des faisceaux du deuxième dispositif ;
un récepteur (901), configuré pour recevoir un premier message provenant d'un premier dispositif, le premier message comprenant des informations de commande de puissance concernant un premier ensemble de faisceaux du deuxième dispositif, le premier ensemble de faisceaux comprenant au moins un faisceau, et les informations de commande de puissance comprenant une instruction de commande de puissance et des informations concernant une puissance de transmission maximale autorisée par le premier dispositif, les informations concernant la puissance de transmission maximale autorisée comprenant les puissances de transmission maximales respectives autorisées pour les faisceaux du deuxième dispositif entre lesquels la puissance n'est pas partagée et/ou une somme de puissances de transmission maximales autorisées pour les faisceaux du deuxième dispositif entre lesquels la puissance est partagée ; et

un processeur (903), configuré pour déterminer une puissance de transmission d'un signal sur le premier ensemble de faisceaux d'après les informations de commande de puissance,

l'émetteur (902) étant également configuré pour envoyer le signal au premier dispositif sur le premier ensemble de faisceaux.

FIG. 1

Base station 1          Terminal          Base station 2

FIG. 2

Base station 1

Terminal

FIG. 3

FIG. 4

FIG. 5

FIG. 6

FIG. 7a

Beam 1 — $P_1$

Beam 2 — $P_2$

FIG. 7b

Beam 1 — $P_{1,M}$

Beam 2 — $P_{2,N}$, $P_{2,N+1}$

Communications device 800

Transmitter
801

Receiver
802

Processor
803

FIG. 8

Communications device 900

Receiver
901

Transmitter
902

Processor
903

FIG. 9

Communications device 1000

Sending module
1010

Receiving module
1020

Processing module
1030

FIG. 10

Communications device 1100

Receiving module
1110

Sending module
1120

Processing module
1130

FIG. 11

**REFERENCES CITED IN THE DESCRIPTION**

**Patent documents cited in the description**

- US 20140315594 A